# EUROPÄISCHE PATENTSCHRIFT

(11) **EP 3 915 386 B1**
(45) Veröffentlichungstag und Bekanntmachung des Hinweises auf die Patenterteilung: **22.07.2026**
(21) Anmeldenummer: 21175750.5
(22) Anmeldetag: 25.05.2021
(51) Int. Cl.: A23G 1/00, A23G 1/12

(54) **REFINERANORDNUNG**
REFINER ARRANGEMENT
AGENCEMENT RAFFINEUR

(30) Priorität: 25.05.2020 DE 102020113940
(43) Veröffentlichungstag der Anmeldung: 01.12.2021
(73) Patentinhaber: Hamburg Dresdner Maschinenfabriken Verwaltungsgesellschaft mbH, 01239 Dresden (DE)
(72) Erfinder: Lohmüller, Tobias, 71691 Freiberg am Necker (DE)
(74) Vertreter: terpatent PartGmbB

(56) Entgegenhaltungen:
- EP-A1- 1 043 070
- WO-A1-2018/196970
- IT-A1- MI 971 277
- US-A- 4 519 304
- US-B1- 6 213 749

## Beschreibung

Die Erfindung betrifft eine Refineranordnung zum Mahlen und Homogenisieren einer Lebensmittelmasse, insbesondere Schokoladenmasse, mit einer Gehäuseanordnung, in der ein Walzenwerk vorgesehen ist, wobei mindestens zwei Walzen drehbar an jeweiligen Walzenenden über Lagermittel gelagert sind und durch eine Antriebsanordnung antreibbar sind, wobei mindestens ein Sensororgan zur Erfassung einer Filmbewegung der Lebensmittelmasse auf zumindest einer Walze vorgesehen sind, wobei mindestens eine Lichtquelle vorgesehen ist, die derart an der Gehäuseanordnung angeordnet ist, dass die Lichtquelle Licht in Richtung der mindestens einen Walze sendet, wobei das Sensororgan und/oder die Lichtquelle derart ausgebildet sind, dass es ein Reflexionsgrad einer bestimmten Wellenlänge eines durch den Film der Lebensmittelmasse reflektierten Anteils des Lichtes erfassbar ist.

Derartige Refineranordnungen sind aus dem Stand der Technik hinlänglich bekannt. Um die Voraussetzung dafür zu schaffen, dass nach einem Conchierprozess die Schokolade die erforderliche Konsistenz erhält, wird die Lebensmasse in einer Refineranordnung durch mehrere Walzen zu einer hauchdünnen Schicht gewalzt. Neben der notwendigen Feinheit beeinflusst der Refinerprozess auch das Schokoladenaroma. Beim Walzen unterliegen die Partikel starken Druck- und Scherkräften, wobei auch die Temperatur im Walzenspalt ansteigt; all diese Faktoren haben einen starken Einfluss auf den Geschmack der Schokolade. Eine gattungsgemäße Refineranordnung ist beispielsweise aus der internationalen Patentanmeldung WO 2015/022374 A1 bekannt. Hierbei wird mittels eines Sensors oder mehreren Sensoren die Artikelgröße der zu mahlenden Lebensmittelmasse aufgenommen und ausgewertet.

Weitere Refineranordnungen, bei denen die Lebensmittelmasse überwacht wird, sind beispielsweise aus den Druckschriften IT MI 971 277 A1, WO 2018/196970 A1 und der US 6 213 749 B1 bekannt. Gattungsgemäße Refineranordnungen sind dahingegen aus der US 4 519 304 A und der EP 1 043 070 A1 bekannt Hierbei wird die Reflexion des Filmes der Lebensmittelmasse auf zumindest einer Walze zur Überwachung herangezogen. All diese Verfahren weisen jedoch den Nachteil auf, dass es durch die große Streuung der Partikelgröße der Lebensmittelmasse sehr ungenau ist. Zudem ist dieses Verfahren im Wesentlichen darauf beschränkt, die Partikelgröße der Lebensmittelmasse an einer Austrittswalze zu erfassen. Aufgrund dieser beschränkten Erfassung ist eine Anpassung des Mahlverfahrens äußerst schwierig und ungenau.

Der vorliegenden Erfindung liegt folglich die Aufgabe zu Grunde, die oben genannten Nachteile auf einfache und kostengünstige Weise zu vermeiden. Desweiteren soll eine Optimierung der gewalzten Masse hinsichtlich deren Konsistenz, die wiederum einen Einfluss auf die Geschmacksentwicklung hat, gewährleistet werden.

Diese Aufgabe wird dadurch gelöst, dass einer Lichtquelle mindestens zwei Sensororgane zugeordnet sind, wobei die Sensororgane den Reflektionsgrad von unterschiedlichen Walzen erfassen. Hierbei sind die Sensororgane natürlich optimal auf die Reflektion des Lichtes ausgerichtet. Hierdurch wird eine Refineranordnung geschaffen, bei der ein möglichst gleichmäßiger Film der Lebensmittelmasse bei gleichbleibender Partikelgröße, auf allen Walzen gewährleistet werden kann. Abhängig von der Lebensmittelmasse kann eine Wellenlänge des Farblichtes mit einer größeren oder weniger großen Absorption gewählt werden, um anhand der Reflektion des Filmes der Lebensmittelmasse eine Beurteilung des Filmes vornehmen zu können, wodurch es insbesondere möglich ist, eine Streifenbildung des Filmes zu verhindern. Durch eine geeignete Anordnung der Lichtquelle ist es zudem möglich, über eine Reflektion mehrere Walzen mit Licht anzustrahlen, wobei die Reflexionen dieser Walzen wiederum durch eine oder mehrere Sensororgane erfasst werden können. Durch die Verwendung von unterschiedlichen Lichtwellenlängen können zudem störende Einflüsse, wie Streulicht, Temperatur, etc. eliminiert werden. Durch die umfassende und schnelle Erfassung des Filmes der Lebensmittelmasse ist es zudem möglich, die Feinheit, das Aroma sowie auch die Durchsatzleistung der Refineranordnung zu optimieren. Die Maßnahmen können sich auch positiv auf die geschmacksbildenden Eigenschaften eines darauffolgenden Conchierprozesses auswirken.

In besonders vorteilhafter Weise sendet die Lichtquelle ein Farblicht mit einer bestimmten Wellenlänge. Bei mehreren Lichtquellen kann natürlich jede Lichtquelle Farblicht mit unterschiedlichen Wellenlängen senden. Auch ist es natürlich denkbar, dass ein Sensororgan eine definierte Wellenlänge des durch die Lichtquelle ausgesendeten Lichtes erfasst. Hierdurch können die unterschiedlichen Reflektionsgrade der Wellenlängen ausgenutzt werden, um in optimaler Weise die Filmbewegung auf unterschiedlichen Walzen über das Sensororgan zu erfassen.

In besonders vorteilhafter Weise sind Mittel zur Anpassung einer Walzengeschwindigkeit vorgesehen, derart, dass eine Differenzialgeschwindigkeit der Walzen zueinander anpassbar ist. Hierdurch kann auf besonders schnelle Weise die Partikelgröße der Lebensmittelmasse, wenn gewünscht, angepasst werden.

Eine weitere Möglichkeit zur direkten Beeinflussung der Partikelgröße ist dadurch gegeben, dass Mittel zur Anpassung eines Walzenabstandes und/oder eines Gegendruckes, der zwischen den Walzen aufbaubar ist, vorgesehen sind. "Horizontal unabhängig" bedeutet in diesem Zusammenhang, dass eine Anpassung auch lediglich an einer Seite von Walzen erfolgen kann. Die Anpassung kann hierbei sowohl während als auch außerhalb eines Refinerprozesses stattfinden. Hierbei ist es vorteilhaft, wenn die Mittel zur horizontal unabhängigen Anpassung eines Walzenabstandes und/oder eines Gegendruckes im Bereich der Lagermittel vorgesehen sind, derart, dass das Spaltmaß oder der Gegendruck unterschiedlich einstellbar ist. Aufgrund der komplexen physikalischen Prozesse beim Einzug der Lebensmittelmasse im Walzenspalt und des Gegendruckes der Walzen aufeinander kann es trotz horizontal paralleler Anordnung der Walzen zu Größenunterschieden bei der Zerkleinerung über die Walzenlänge kommen. Die Korrektur des Walzenabstandes gezielt im Bereich der Lagermittel ermöglicht eine gleichmäßige Filmdicke. Die Kombinatorik der beiden Feinheitsregulierungen lassen hierbei eine weitere Stabilisierung der maximalen Durchsatzleistung zu.

In besonders vorteilhafter Weise ist mindestens einer Walze eine Befeuchtungsanordnung zur Befeuchtung der Lebensmittelmasse mit z.B. Wasser, Emulgatoren, Kakaobutter und/oder Aromen zugeordnet. Hierdurch ist es möglich, die Feinheit und die Conchiereigenschaft der Lebensmittelmasse sowie der Geschmacksbildung innerhalb der Refineranordnung zu optimieren. Beispielsweise kann eine Karamellisierung direkt verändert werden und die Durchsatzleistung noch einmal erhöht werden. Somit kommt zu einer primären Aufgabe des Walzwerkes, nämlich der gezielten Zerkleinerung, eine gezielte Geschmacksoptimierung hinzu, die bisher inhärent und nicht kontrolliert stattgefunden hat.

Des Weiteren kann in vorteilhafter Weise eine Steuereinrichtung vorgesehen sein, die Regeleinrichtungen steuerungstechnisch miteinander verbindet, wobei die mindestens eine Lichtquelle mit dem mindestens einen Sensororgan, mit der Antriebsanordnung und/oder mit den Mitteln zur Anpassung der Walzengeschwindigkeit und/oder mit dem Mittel zur Anpassung des Walzenabstandes und/oder mit der mindestens einen Befeuchtungsanordnung steuerungstechnisch verbunden ist. Hierdurch ist es möglich, abhängig vom erfassten Film der Lebensmittelmasse, sehr spezifisch Änderungen an den Regeleinrichtungen der Refineranordnung vorzunehmen, um zu jeder Zeit bei hoher Durchsatzleistung eine optimale Qualität der gemahlenen Lebensmittelmasse in Bezug auf Geschmack und Feinheit gewährleisten zu können. In diesem Zusammenhang ist es besonders vorteilhaft, wenn in der Steuereinrichtung ein Algorithmus hinterlegt ist, auf dessen Basis die Regeleinrichtungen ansteuerbar sind.

Eine zusätzliche Möglichkeit die Durchsatzleistung zu erhöhen, ist dadurch gegeben, dass ein Walzenwerk mit fünf Walzen vorgesehen ist, wobei ein Walzendurchmesser der in Richtung der Filmbewegung gesehen letzten beiden Walzen größer ist, als ein Walzendurchmesser der in Filmbewegung gesehen ersten drei Walzen.

Die Erfindung wird anhand einer Zeichnung näher erläutert, hierbei zeigt:
Figur 1 eine perspektivische Ansicht einer erfindungsgemäßen Refineranordnung, und
Figur 2 eine perspektivische, schematische Ansicht eines Walzenwerkes der Refineranordnung aus Figur 1.

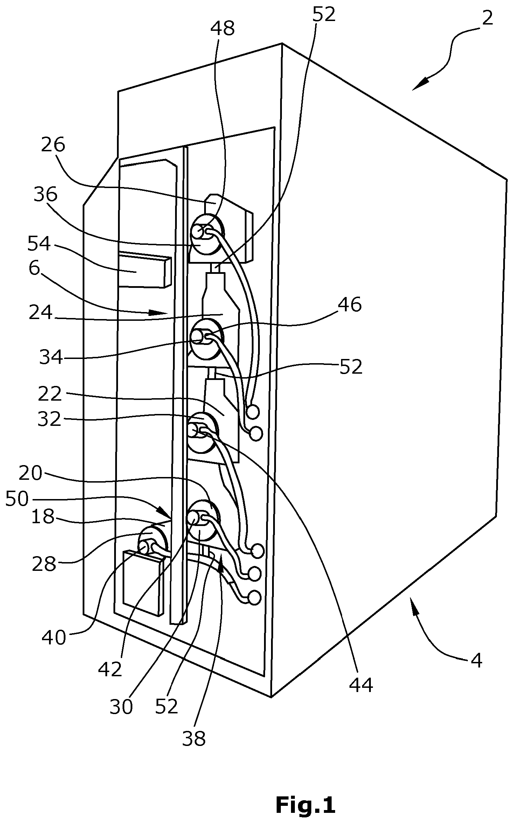

Figur 1 zeigt in einer perspektivischen Ansicht eine Refineranordnung 2 zum Mahlen und homogenisieren einer Lebensmittelmasse 3, hier einer Schokoladenmasse. Die Refineranordnung besitzt eine Gehäuseanordnung 4, in der ein Walzenwerk 6 mit fünf Walzen 8, 10, 12, 14, 16 vorgesehen ist. An jeweiligen Walzenenden 18, 20, 22, 24, 26 sind die fünf Walzen 8, 10, 12, 14, 16 über entsprechende Lagermittel 28, 30, 32, 34, 36 beidseitig gelagert. Es sollte deutlich sein, dass in Figur 1 lediglich ein Walzenende 18, 20, 22, 24, 26 der entsprechenden Walze 8, 10, 12, 14, 16 dargestellt ist. Die Walzen 8, 10, 12, 14, 16 sind durch eine Antriebsanordnung 38 antreibbar. Um jede Walze 8, 10, 12, 14, 16 unabhängig von den anderen Walzen 8, 10, 12, 14, 16 anzutreiben, weist jede Walze 8, 10, 12, 14, 16 eine eigene Antriebseinrichtung 40, 42, 44, 46, 48 auf, die in diesem Fall die Mittel zur flexiblen Anpassung einer Walzengeschwindigkeit der jeweiligen Walzen 8, 10, 12, 14, 16 bilden. Hierdurch können die Differenzialgeschwindigkeiten der Walzen 8, 10, 12, 14, 16 zueinander angepasst werden, wodurch insbesondere eine Partikelgröße der zu mahlenden Schokoladenmasse 3 einfach anzupassen ist. Die Antriebsanordnung 38 kann jedoch auch lediglich eine oder zwei Antriebseinrichtungen aufweisen, wobei die Mittel zur Anpassung der Walzengeschwindigkeit dann auch aus einem geeigneten Getriebe bestehen können, das dann mit einer zentralen Antriebseinrichtung wirkverbunden ist.

Zwischen den Lagermitteln 28, 30 sind Mittel zur Anpassung des Walzenabstandes 50 vorgesehen. Hierbei ist das Lagermittel 36 verschiebbar in Bezug auf das Lagermittel 34 auf einer vertikal verlaufenen Achse 52 angeordnet. Am entgegengesetzten Wellenende ist die gleiche Anordnung vorgesehen. Über geeignete, nicht weiter dargestellte Antriebsmittel kann dann das Spaltmaß zwischen den Walzenenden 18, 20 eingestellt werden, um auch hierüber Einfluss auf die Partikelgröße zu nehmen.

Entsprechende Mittel 52 sind auch bzgl. der Walzen 10, 12, 14, 16 vorgesehen. Hier steht jedoch eine einseitige oder auch beidseitige Veränderung des Gegendruckes/Walzenabstands der Walzen 10, 12, 14, 16 im Vordergrund. Die Achse 52 wird lediglich exemplarisch als Mittel zur Anpassung genannt. Es sollte deutlich sein, dass auch hier entsprechende Antriebsmittel vorzusehen sind.

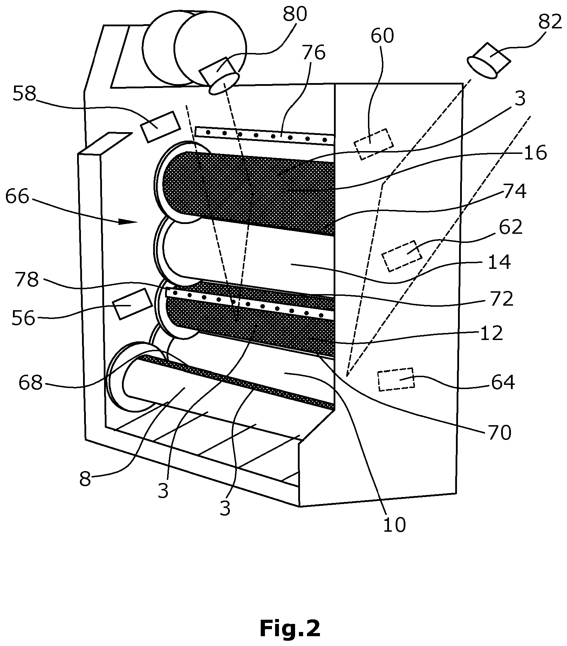

Mit 54 ist eine Steuereinrichtung vorgesehen, die abhängig von den Signalen mehrerer Sensororgane 56, 58, 60, 62, 64 (siehe hierzu Figur 2, wobei die Sensororgane 60, 62, 64 gestrichelt dargestellt sind) im vorliegenden Ausführungsbeispiel Regeleinrichtungen, wie die Antriebsanordnung 38 mit den jeweiligen Antriebseinrichtungen 8, 10, 12, 14, 16 und die Mittel 52 zur Anpassung des Walzenabstandes/Gegendruckes und eine in Zusammenhang mit Figur 2 dargestellte Befeuchtungsanordnung 66 ansteuert, um ein optimales Ergebnis hinsichtlich Qualität, Feinheit, Aroma und Durchsatzleistung zu gewährleisten. Hierzu ist in der Steuereinrichtung 54 ein Algorithmus hinterlegt.

Figur 2 zeigt nun in einer schematischen, perspektivischen Ansicht das Walzenwerk 6. Die Schokoladenmasse 3 wird ausgehend von der untersten Walze 8 über die Walzen 10, 12, 14 zur letzten Walze 16 geführt. Die zu mahlende Lebensmittelmasse 3 wird hier ausgehend von der untersten Walze 8, auch Eintrittswalze genannt, über den Spalt 68 zur Rückseite der Walze 10, dann über den Spalt 70 zur Vorderseite der Walze 12, über den Spalt 72 zur Rückseite der Walze 14 und dann über den Spalt 74, zur letzten Walze 16, der Auswurfwalze, geführt. Wie oben bereits erläutert, ist in der vorliegenden Ausführungsform das Spaltmaß des Spaltes 68 einstellbar. Bei den "Spalten" 70, 72, 74 liegen die entsprechenden Walzen 10, 12, 14 und 16 zumindest teilweise mit ihren Umfangsflächen gegeneinander an, so dass hier in erster Linie nicht von einer Veränderung des Spaltmaßes, sondern von einer Veränderung des Gegendruckes der Walzen aufeinander, gesprochen wird.

Mit dem Bezugszeichen 76 und 78 sind hier durch Linien dargestellte Befeuchtungseinrichtungen der Befeuchtungsanordnung 66 bezeichnet. Abhängig von dem Erscheinungsbild des Films der Schokoladenmasse 3 wird hier eine Befeuchtung der Schokoladenmasse 3 mit z.B. Wasser, Kakaobutter, Emulgatoren und/oder Aromen vorgenommen.

Wie bereits oben angedeutet, sind Sensororgane 56, 58, 60, 62, 64 in Form von optischen Sensoren vorgesehen, die auf den Film der Schokoladenmasse 3 von Lichtquellen 80, 82 mit jeweils einer bestimmten Wellenlänge ausgesendetes Farblicht detektieren. Die Lichtquellen 80, 82 sind hierbei so angeordnet, dass das ausgesendete Farblicht zu einer maximalen Reflektion zu den optischen Sensoren führt. Anhand des Reflektionsgrades ist eine präzise Aussage über das Erscheinungsbild, insbesondere hinsichtlich der Streifenbildung oder der Feinheit des Films der Schokoladenmasse 3 möglich. Die Lichtquellen 80, 82 sind jeweils auf eine Vorderseite und auf eine Rückseite des Walzenwerkes 6 gerichtet. Durch die präzise Ausrichtung der Lichtquellen 80, 82 ist es hierbei möglich, mehrere Walzen und damit mehrere Bereiche des Films der Schokoladenmasse 3 mit Licht zu versorgen und somit auf besonders einfache und kostengünstige Weise eine Erfassung der Qualität der Schokoladenmasse 3 zu ermöglichen. Es ist in diesem Zusammenhang natürlich auch möglich, Licht mit einem großen Spektrum, wie zum Beispiel Weißlicht, auszusenden und Sensororgane einzusetzen, die jeweils nur einen bestimmten Wellenbereich detektieren.

Die letzten beiden Walzen 14, 16 weisen in diesem Ausführungsbeispiel einen größeren Durchmesser auf, um die Durchsatzleistung noch einmal wesentlich (>30%) zu erhöhen.

## Patentansprüche

1. Refineranordnung zum Mahlen und Homogenisieren einer Lebensmittelmasse (3), insbesondere Schokoladenmasse, mit einer Gehäuseanordnung (4), in der ein Walzenwerk (6) vorgesehen ist, wobei mindestens zwei Walzen (8, 10, 12, 14, 16) drehbar an jeweiligen Walzenenden (18, 20, 22, 24, 26) über Lagermittel (28, 30, 32, 34, 36) gelagert sind und durch eine Antriebsanordnung (38) antreibbar sind, wobei mindestens ein Sensororgan (56, 58, 60, 62, 64) zur Erfassung einer Reflexion eines Filmes der Lebensmittelmasse (3) auf zumindest einer Walze (8, 10, 12, 14, 16) vorgesehen ist, wobei mindestens eine Lichtquelle (80, 82) vorgesehen ist, die derart an der Gehäuseanordnung (4) angeordnet ist, dass die Lichtquelle (80, 82) Licht in Richtung der mindestens einen Walze (8, 10, 12, 14, 16) sendet, wobei das Sensororgan (56, 58, 60, 62, 64) und/oder die Lichtquelle (80, 82) derart ausgebildet sind, dass ein Reflektionsgrad einer bestimmten Wellenlänge eines durch den Film der Lebensmittelmasse (3) reflektierten Anteils des Lichtes erfassbar ist,
**dadurch gekennzeichnet, dass**
einer Lichtquelle (80, 82) mindestens zwei Sensororgane (56, 58, 60, 62, 64) zugeordnet sind, wobei die Sensororgane den Reflektionsgrad von unterschiedlichen Walzen (8, 10, 12, 14, 16) erfassen.

2. Refineranordnung nach Anspruch 1,
**dadurch gekennzeichnet, dass**
die Lichtquelle (80, 82) ein Farblicht mit einer bestimmten Wellenlänge sendet.

3. Refineranordnung nach Anspruch 1,
**dadurch gekennzeichnet, dass**
ein Sensororgan (56, 58, 60, 62, 64) eine definierte Wellenlänge des durch die Lichtquelle (80, 82) ausgesendeten Lichtes erfasst.

4. Refineranordnung nach einem der vorhergehenden Ansprüche,
**dadurch gekennzeichnet, dass**
Mittel zur Anpassung (40, 42, 44, 46, 48) einer Walzengeschwindigkeit vorgesehen sind, derart, dass eine Differenzialgeschwindigkeit der Walzen (8, 10, 12, 14, 16) zueinander anpassbar ist.

5. Refineranordnung nach einem der vorhergehenden Ansprüche,
**dadurch gekennzeichnet, dass**
Mittel zur Anpassung eines Walzenabstandes und/oder eines Gegendruckes, der zwischen den Walzen (8, 10, 12, 14, 16) aufbaubar ist, vorgesehen sind.

6. Refineranordnung nach Anspruch 5,
**dadurch gekennzeichnet, dass**
die Mittel zur horizontal unabhängigen Anpassung eines Walzenabstandes und/oder eines Gegendruckes im Bereich der Lagermittel (28, 30, 32, 34, 36) vorgesehen sind, derart, dass das Spaltmaß oder der Gegendruck unterschiedlich einstellbar ist.

7. Refineranordnung nach einem der vorhergehenden Ansprüche,
**dadurch gekennzeichnet, dass**
mindestens einer Walze (8, 10, 12, 14, 16) eine Befeuchtungsanordnung (66) zur Befeuchtung der Lebensmittelmasse (3) z.B. mit Wasser, Emulgatoren, Kakaobutter und/oder Aromen zugeordnet ist.

8. Refineranordnung nach einem der vorhergehenden Ansprüche,
**dadurch gekennzeichnet, dass**
eine Steuereinrichtung (54) vorgesehen ist, die Regeleinrichtungen steuerungstechnisch miteinander verbindet, wobei die mindestens eine Lichtquelle (80, 82) mit dem mindestens einen Sensororgan (56, 58, 60, 62, 64), mit der Antriebsanordnung (38) und/oder mit den Mitteln zur Anpassung der Walzengeschwindigkeit (8, 10, 12, 14, 16) und/oder mit den Mitteln zur Anpassung des Walzenabstandes (50) und/oder mit der mindestens einen Befeuchtungsanordnung (66) steuerungstechnisch verbunden ist.

9. Refineranordnung nach Anspruch 8,
**dadurch gekennzeichnet, dass**
in der Steuereinrichtung (54) ein Algorithmus hinterlegt ist, auf dessen Basis die Regeleinrichtungen ansteuerbar sind.

10. Refineranordnung nach einem der vorhergehenden Ansprüche,
**dadurch gekennzeichnet, dass**
ein Walzenwerk (6) mit fünf Walzen (8, 10, 12, 14, 16) vorgesehen ist, wobei ein Walzendurchmesser der in Richtung der Filmbewegung gesehen letzten beiden Walzen (14, 16) größer ist, als ein Walzendurchmesser der in Filmbewegung gesehen ersten drei Walzen (8, 10, 12).

## Claims

1. Refiner assembly for grinding and homogenizing a food mass (3), in particular a chocolate mass, comprising a housing assembly (4), in which a roll mill (6) is provided, wherein at least two rolls (8, 10, 12, 14, 16) are rotatably mounted at respective roll ends (18, 20, 22, 24, 26) by bearing means (28, 30, 32, 34, 36) and are drivable by a drive assembly (38), wherein at least one sensor member (56, 58, 60, 62, 64) is provided for detecting a reflection of a film of the food mass (3) on at least one roll (8, 10, 12, 14, 16), wherein at least one light source (80, 82) is provided, which is arranged on the housing assembly (4) such that the light source (80, 82) emits light in the direction of the at least one roll (8, 10, 12, 14, 16), wherein the sensor member (56, 58, 60, 62, 64) and/or the light source (80, 82) are configured such that a degree of reflection of a specific wavelength of a portion of the light reflected by the film of the food mass (3) is detectable,
**characterized in that**
at least two sensor members (56, 58, 60, 62, 64) are assigned to one light source (80, 82), wherein the sensor members detect the degree of reflection of different rolls (8, 10, 12, 14, 16).

2. Refiner assembly according to claim 1,
**characterized in that**
the light source (80, 82) emits colored light having a specific wavelength.

3. Refiner assembly according to claim 1,
**characterized in that**
a sensor member (56, 58, 60, 62, 64) detects a defined wavelength of the light emitted by the light source (80, 82).

4. Refiner assembly according to one of the preceding claims,
**characterized in that**
means for adjusting (40, 42, 44, 46, 48) a roll speed are provided such that a differential speed of the rolls (8, 10, 12, 14, 16) relative to one another is adjustable.

5. Refiner assembly according to one of the preceding claims,
**characterized in that**
means for adjusting a roll spacing and/or a counterpressure which can be built up between the rolls (8, 10, 12, 14, 16) are provided.

6. Refiner assembly according to claim 5,
**characterized in that**
the means are provided for horizontally independent adjustment of a roll spacing and/or of a counterpressure in the region of the bearing means (28, 30, 32, 34, 36), such that the gap dimension or the counterpressure is adjustable differently.

7. Refiner assembly according to one of the preceding claims,
**characterized in that**
a moistening assembly (66) for moistening the food mass (3), for example with water, emulsifiers, cocoa butter and/or aromas, is assigned to at least one roll (8, 10, 12, 14, 16).

8. Refiner assembly according to one of the preceding claims,
**characterized in that**
a control device (54) is provided, which connects control units to one another in terms of control technology, wherein the at least one light source (80, 82) is connected, in terms of control technology, to the at least one sensor member (56, 58, 60, 62, 64), to the drive assembly (38) and/or to the means for adjusting the roll speed (8, 10, 12, 14, 16) and/or to the means for adjusting the roll spacing (50) and/or to the at least one moistening assembly (66).

9. Refiner assembly according to claim 8,
**characterized in that**
an algorithm is stored in the control device (54), on the basis of which the control units are controllable.

10. Refiner assembly according to one of the preceding claims,
**characterized in that**
a roll mill (6) having five rolls (8, 10, 12, 14, 16) is provided, wherein a roll diameter of the last two rolls (14, 16), as seen in the direction of film movement, is greater than a roll diameter of the first three rolls (8, 10, 12), as seen in the direction of film movement.

## Revendications

1. Dispositif de raffinage destiné au broyage et à l'homogénéisation d'une masse alimentaire (3), en particulier d'une masse de chocolat, comprenant un ensemble de boîtier (4) dans lequel est prévu un train de cylindres (6), au moins deux cylindres (8, 10, 12, 14, 16) étant montés rotatifs, au niveau de leurs extrémités respectives (18, 20, 22, 24, 26), par l'intermédiaire de moyens de palier (28, 30, 32, 34, 36), et pouvant être entraînés par un ensemble d'entraînement (38), au moins un organe capteur (56, 58, 60, 62, 64) étant prévu pour détecter la réflexion d'un film de la masse alimentaire (3) sur au moins un cylindre (8, 10, 12, 14, 16), au moins une source lumineuse (80, 82) étant prévue, laquelle est disposée sur l'ensemble de boîtier (4) de telle sorte que la source lumineuse (80, 82) émette de la lumière en direction dudit au moins un cylindre (8, 10, 12, 14, 16), l'organe capteur (56, 58, 60, 62, 64) et/ou la source lumineuse (80, 82) étant conçus de telle sorte qu'un degré de réflexion, à une longueur d'onde déterminée, d'une partie de la lumière réfléchie par le film de la masse alimentaire (3), puisse être détecté,
**caractérisé en ce que**
au moins deux organes capteurs (56, 58, 60, 62, 64) sont associés à une source lumineuse (80, 82), les organes capteurs détectant le degré de réflexion de différents cylindres (8, 10, 12, 14, 16).

2. Dispositif de raffinage selon la revendication 1,
**caractérisé en ce que**
la source lumineuse (80, 82) émet une lumière colorée ayant une longueur d'onde déterminée.

3. Dispositif de raffinage selon la revendication 1,
**caractérisé en ce que**
un organe capteur (56, 58, 60, 62, 64) détecte une longueur d'onde définie de la lumière émise par la source lumineuse (80, 82).

4. Dispositif de raffinage selon l'une quelconque des revendications précédentes,
**caractérisé en ce que**
des moyens d'adaptation (40, 42, 44, 46, 48) d'une vitesse de cylindre sont prévus, de telle sorte qu'une vitesse différentielle entre les cylindres (8, 10, 12, 14, 16) soit réglable.

5. Dispositif de raffinage selon l'une quelconque des revendications précédentes,
**caractérisé en ce que**
des moyens destinés à l'adaptation d'un écartement entre cylindres et/ou d'une contre-pression pouvant être établie entre les cylindres (8, 10, 12, 14, 16) sont prévus.

6. Dispositif de raffinage selon la revendication 5,
**caractérisé en ce que**
les moyens destinés à l'adaptation horizontalement indépendante d'un écartement entre cylindres et/ou d'une contre-pression sont prévus dans la zone des moyens de palier (28, 30, 32, 34, 36), de telle sorte que la largeur de l'interstice ou la contre-pression puisse être réglée différemment.

7. Dispositif de raffinage selon l'une quelconque des revendications précédentes,
**caractérisé en ce que**
au moins un cylindre (8, 10, 12, 14, 16) est associé à un dispositif de mouillage (66) destiné à mouiller la masse alimentaire (3), par exemple avec de l'eau, des émulsifiants, du beurre de cacao et/ou des arômes.

8. Dispositif de raffinage selon l'une quelconque des revendications précédentes,
**caractérisé en ce que**
un dispositif de commande (54) est prévu, lequel relie entre eux, du point de vue de la commande, des dispositifs de régulation, l'au moins une source lumineuse (80, 82) étant reliée, du point de vue de la commande, à l'au moins un organe capteur (56, 58, 60, 62, 64), à l'ensemble d'entraînement (38) et/ou aux moyens destinés à l'adaptation de la vitesse de cylindre (8, 10, 12, 14, 16) et/ou aux moyens destinés à l'adaptation de l'écartement entre cylindres (50) et/ou à l'au moins un dispositif de mouillage (66).

9. Dispositif de raffinage selon la revendication 8,
**caractérisé en ce que**
un algorithme est mémorisé dans le dispositif de commande (54), sur la base duquel les dispositifs de régulation peuvent être commandés.

10. Dispositif de raffinage selon l'une quelconque des revendications précédentes,
**caractérisé en ce que**
un train de cylindres (6) comportant cinq cylindres (8, 10, 12, 14, 16) est prévu, un diamètre des deux derniers cylindres (14, 16), considérés dans le sens du mouvement du film, étant supérieur à un diamètre des trois premiers cylindres (8, 10, 12), considérés dans le sens du mouvement du film.
